# EUROPÄISCHE PATENTSCHRIFT

(11) **EP 3 894 819 B1**
(45) Veröffentlichungstag und Bekanntmachung des Hinweises auf die Patenterteilung: **28.08.2024**
(21) Anmeldenummer: 19817255.3
(22) Anmeldetag: 06.12.2019
(51) Int. Cl.: G01L 5/00, G01M 99/00, G01N 3/04, G01N 3/08

(54) **BEFESTIGUNGSANORDNUNG ZUM BEFESTIGEN EINES PRÜFVORRICHTUNGSHALTERS AN EINER KRAFTMESSEINRICHTUNG, KRAFTMESSEINRICHTUNG MIT EINER SOLCHEN BEFESTIGUNGSANORDNUNG; PRÜFVORRICHTUNGSHALTER, UND SCHLITTENTEIL FÜR EINE KRAFTMESSEINRICHTUNG**
FASTENING ASSEMBLY FOR FASTENING A TEST DEVICE HOLDER TO A FORCE-MEASURING APPARATUS, FORCE-MEASURING APPARATUS HAVING A FASTENING ASSEMBLY OF THIS TYPE, TEST DEVICE HOLDER, AND SLIDE PART FOR A FORCE-MEASURING APPARATUS
ENSEMBLE DE FIXATION DESTINÉ À FIXER UN SUPPORT DE DISPOSITIF DE VÉRIFICATION SUR UN DISPOSITIF DE MESURE DE FORCE, DISPOSITIF DE MESURE DE FORCE DOTÉ D'UN TEL ENSEMBLE DE FIXATION, SUPPORT DE DISPOSITIF DE VÉRIFICATION ET ÉLÉMENT COULISSEAU POUR UN DISPOSITIF DE MESURE DE FORCE

(30) Priorität: 10.12.2018 DE 102018221336
(43) Veröffentlichungstag der Anmeldung: 20.10.2021
(73) Patentinhaber: Vetter Pharma-Fertigung GmbH & Co. KG, 88212 Ravensburg (DE)
(72) Erfinder: WOLFF, Michael, 88167 Gestratz (DE)
(74) Vertreter: Kordel, Mattias
(86) Internationale Anmeldenummer: PCT/EP2019/083940
(87) Internationale Veröffentlichungsnummer: WO 2020/120303

(56) Entgegenhaltungen:
- GB-A- 2 310 502
- US-A- 5 421 207
- US-A1- 2015 343 148

## Beschreibung

Die Erfindung betrifft eine Befestigungsanordnung zum Befestigen eines Prüfvorrichtungshalters an einer Kraftmesseinrichtung, eine Kraftmesseinrichtung mit einer solchen Befestigungsanordnung, einen Prüfvorrichtungshalter, und ein Schlittenteil für eine Kraftmes seinrichtung.

Kraftmesseinrichtungen der hier angesprochenen Art werden insbesondere verwendet, um Zug- und Druckprüfungen, insbesondere an medizinischen Hohlkörpern, vorzunehmen. So kann mittels solcher Kraftmesseinrichtungen beispielsweise eine Gleitkraft und/oder Dichtigkeit eines verlagerbaren Kolbens in einem medizinischen Hohlkörper insbesondere anhand der zur Verlagerung des Kolbens nötigen Druckkraft bestimmt werden, wobei insbesondere auch geprüft werden kann, ob eine ausreichende oder eventuell eine zu große Menge an Silikon oder einem anderen Gleitmittel appliziert ist. Weiterhin können Stabilität, Montagekraft, Bruchkraft, Torsionswiderstand und andere Eigenschaften, insbesondere bei medizinischen Hohlkörpern, geprüft werden. Eine derartige Kraftmesseinrichtung weist typischerweise einen Prüfvorrichtungshalter zum Halten wenigstens einer Prüfvorrichtung, beispielsweise eines Druckstempels in Kombination mit einer Kraftmessdose, sowie ein Schlittenteil auf, das an einem Kraftmessturm der Kraftmesseinrichtung in Hochrichtung des Kraftmessturms verlagerbar angeordnet ist. Der Prüfvorrichtungshalter ist dabei an dem Schlittenteil befestigt und mit dem Schlittenteil gemeinsam in Hochrichtung des Kraftmessturms verlagerbar. Zur Kraftmessung, insbesondere Zug-/Druckmessung, wird der Prüfvorrichtungshalter mit der wenigstens einen Prüfvorrichtung auf dem Schlitten relativ zu einem Probenhalter und insbesondere einer an dem Probenhalter angeordneten Probe entlang der Hochrichtung des Kraftmessturms verlagert oder zumindest in Verlagerungsrichtung - entweder in Zug- oder Druckrichtung - mit einer Kraft beaufschlagt. Diese Kraft wird - insbesondere zeitabhängig - erfasst. Aus einem zeitlichen Kraftverlauf und/oder einem über eine Verlagerungsstrecke des Schlittens aufgetragenen Kraftverlauf können dann Informationen über die Probe erhalten werden.

Um reproduzierbare und relevante Ergebnisse zu erhalten, ist es nötig, dass die Probe einerseits und der Verlagerungsweg des Prüfvorrichtungshalters mit der Prüfvorrichtung andererseits, insbesondere also die Ausrichtung des Prüfvorrichtungshalters entlang der Hochrichtung des Kraftmessturms, exakt parallel zueinander ausgerichtet sind. Insbesondere darf zwischen der Längsausrichtung der Prüfvorrichtung und der Hochrichtung des Kraftmessturms kein Winkelversatz vorhanden sein, wenn die Messergebnisse aussagekräftig sein sollen.

Es besteht daher Bedarf an einer Möglichkeit, den Prüfvorrichtungshalter in präzise definierter und reproduzierbarer Weise an der Kraftmesseinrichtung zu befestigen.

US 5 421 207 A offenbart eine Ausrichtkupplung für Materialprüfvorrichtungen.

GB 2 310 502 A offenbart eine Materialprüfvorrichtung mit einem Prüfvorrichtungshalter und einem Schlittenteil, das an einem Kraftmessturm einer Kraftmesseinrichtung in Hochrichtung des Kraftmessturms verlagerbar angeordnet ist.

US 2015/343148 A1 offenbart eine Prüfvorrichtung zur Bestimmung der mechanischen Eigenschaften von Spritzen.

Der Erfindung liegt daher die Aufgabe zugrunde, eine Befestigungsanordnung zum Befestigen eines Prüfvorrichtungshalters an einer Kraftmesseinrichtung, eine Kraftmesseinrichtung mit einer solchen Befestigungsanordnung, einen Prüfvorrichtungshalter zur Befestigung an einer solchen Kraftmesseinrichtung, und ein Schlittenteil für eine solche Kraftmesseinrichtung zu schaffen, wobei die genannten Nachteile nicht auftreten, und wobei insbesondere eine präzise, stabile und reproduzierbare Befestigung des Prüfvorrichtungshalters an der Kraftmesseinrichtung möglich ist.

Die Aufgabe wird gelöst, indem die Gegenstände der unabhängigen Ansprüche geschaffen werden. Vorteilhafte Ausgestaltungen ergeben sich aus den Unteransprüchen.

Die Aufgabe wird insbesondere gelöst, indem eine Befestigungsanordnung zum Befestigen eines Prüfvorrichtungshalters an einer Kraftmesseinrichtung geschaffen wird, die einen Prüfvorrichtungshalter aufweist, sowie ein Schlittenteil, das an einem Kraftmessturm einer Kraftmesseinrichtung in Hochrichtung des Kraftmessturms verlagerbar anordenbar - oder angeordnet - ist, wobei der Prüfvorrichtungshalter wenigstens ein Lagebestimmungselement aufweist, und wobei das Schlittenteil wenigstens ein Gegenlagebestimmungselement aufweist. Das Lagebestimmungselement und das Gegenlagebestimmungselement sind eingerichtet - und insbesondere aufeinander abgestimmt -, um eine Lage des Prüfvorrichtungshalters relativ zu dem Schlittenteil in zumindest einer Richtung, ausgewählt aus einer Hochrichtung des Kraftmessturms und einer Richtung senkrecht zu der Hochrichtung, insbesondere einer Breitenrichtung, festzulegen, und zugleich eine Drehung des Prüfvorrichtungshalters relativ zu dem Schlittenteil um eine durch das Lagebestimmungselement und/oder das Gegenlagebestimmungselement definierte Drehachse zu gestatten. Der Prüfvorrichtungshalter weist außerdem eine erste Winkeljustiervorrichtung auf, und das Schlittenteil weist eine zweite Winkeljustiervorrichtung auf. Die Winkeljustiervorrichtungen sind eingerichtet - und insbesondere aufeinander abgestimmt - um einen Winkel des Prüfvorrichtungshalters relativ zu dem Schlittenteil um die Drehachse zu justieren. Vorzugsweise sind die Winkeljustiervorrichtungen zusätzlich eingerichtet - und bevorzugt aufeinander abgestimmt -, um den Winkel des Prüfvorrichtungshalters relativ zu dem Schlittenteil um die Drehachse festzulegen. Der Prüfvorrichtungshalter weist außerdem wenigstens ein Fixierelement auf, und das Schlittenteil weist wenigstens einen Gegenfixierelement auf. Das Fixierelement und Gegenfixierelement sind eingerichtet - und vorzugsweise aufeinander abgestimmt -, um den Prüfvorrichtungshalter an dem Schlittenteil zu fixieren. Mittels des Lagebestimmungselements und des Gegenlagebestimmungselements ist es somit ohne weiteres möglich, den Prüfvorrichtungshalter an dem Schlittenteil und relativ zu dem Schlittenteil zumindest in einer linearen Richtung festzulegen, wobei anschließend eine Winkelausrichtung des Prüfvorrichtungshalters relativ zu dem Schlittenteil und damit zugleich bevorzugt relativ zu der Hochrichtung des Kraftmessturms durch Drehen des Prüfvorrichtungshalters um die Drehachse möglich ist. Hierzu werden vorteilhaft die Winkeljustiervorrichtungen verwendet, die besonders bevorzugt zugleich verwendet werden können, um den Winkel festzulegen. Schließlich kann die Position des Prüfvorrichtungshalters an dem Schlittenteil mittels des Fixierelements und des Gegenfixierelements fixiert werden, sodass sie - insbesondere während einer Verwendung der Kraftmesseinrichtung, vorzugsweise während einer Vielzahl aufeinanderfolgender Verwendungen der Kraftmesseinrichtung - unveränderlich bleibt. Somit ist es mit Hilfe der hier vorgeschlagenen Befestigungsanordnung möglich, den Prüfvorrichtungshalter sicher, stabil und reproduzierbar an der Kraftmesseinrichtung auszurichten und festzulegen.

Der Prüfvorrichtungshalter ist insbesondere eingerichtet zur Anordnung wenigstens einer Prüfvorrichtung an dem Prüfvorrichtungshalter. Besonders bevorzugt ist der Prüfvorrichtungshalter eingerichtet zur Anordnung von drei Prüfvorrichtungen an dem Prüfvorrichtungshalter. Eine solche Prüfvorrichtung weist vorzugsweise ein Prüfelement, insbesondere einen Druckstempel, sowie eine mit dem Prüfelement wirkverbundene Kraftmessdose auf. Vorzugsweise ist an dem Prüfvorrichtungshalter wenigstens eine Prüfvorrichtung angeordnet. Besonders bevorzugt sind an dem Prüfvorrichtungshalter drei Prüfvorrichtungen angeordnet.

Das Schlittenteil ist vorzugsweise an dem Kraftmessturm ausschließlich in Hochrichtung verlagerbar, und vorzugsweise in den anderen kartesischen Richtungen, die senkrecht auf der Hochrichtung stehen, lagefest mit dem Kraftmessturm verbunden. Auf diese Weise kann das Schlittenteil und damit zugleich der mit dem Schlittenteil verbundene Prüfvorrichtungshalter in definierter, genauer und reproduzierbarer Weise entlang der Hochrichtung des Kraftmessturms verlagert werden, ohne Überlagerung weiterer Bewegungen. Das Schlittenteil kann selbst als Schlitten des Kraftmessturms ausgebildet sein, der mittels eines geeigneten Verlagerungsmechanismus linear in Hochrichtung des Kraftmessturms an diesem verlagerbar gehalten ist. Es kann sich bei dem Schlittenteil aber auch um einen Schlittenaufsatz handeln, der lösbar an einem Schlitten des Kraftmessturms befestigt ist.

Bevorzugt sind das Lagebestimmungselement und das Gegenlagebestimmungselement eingerichtet - und insbesondere aufeinander abgestimmt - um die Lage des Prüfvorrichtungshalters relativ zu dem Schlittenteil in beide Richtungen, nämlich in Hochrichtung des Kraftmessturms und in der Richtung senkrecht zu der Hochrichtung, insbesondere der Breitenrichtung, festzulegen. Auf diese Weise kann der Prüfvorrichtungshalter besonders genau und stabil an dem Schlittenteil angeordnet werden.

Die durch das Lagebestimmungselement und/oder das Gegenlagebestimmungselement definierte Drehachse ist bevorzugt so ausgerichtet, dass eine Drehung des Prüfvorrichtungshalters relativ zu dem Schlittenteil um die Drehachse in einer Ebene erfolgt, in welcher die Hochrichtung des Kraftmessturms liegt, insbesondere in einer Ebene, in der sowohl die Hochrichtung des Kraftmessturms als auch die senkrecht auf dieser stehende Breitenrichtung liegen. Die Drehachse steht also senkrecht auf dieser Ebene. Insbesondere erstreckt sich die Drehachse in Tiefenrichtung der Kraftmesseinrichtung.

Die kartesischen Achsen/Richtungen der Kraftmesseinrichtung sind insbesondere die durch den Kraftmessturm definierte Hochrichtung, die senkrecht auf dieser stehende Breitenrichtung, die sich für einen vor der Kraftmesseinrichtung stehenden Benutzer mit Blick auf die Kraftmesseinrichtung horizontal von links nach rechts - oder umgekehrt - erstreckt, und eine Tiefenrichtung, die sich senkrecht zu der Hochrichtung und der Breitenrichtung in Blickrichtung des auf die Kraftmesseinrichtung blickenden Benutzers erstreckt.

Das Fixierelement und das Gegenfixierelement sind insbesondere eingerichtet - und vorzugsweise aufeinander abgestimmt -, um den Prüfungsvorrichtungshalter an dem Schlittenteil zu arretieren. Dabei wird gegebenenfalls die Relativlage zwischen dem Prüfvorrichtungshalter und dem Schlittenteil - inklusive des Winkels um die definierte Drehachse - eindeutig festgelegt.

Die Lage des Prüfvorrichtungshalters relativ zu dem Schlittenteil in Tiefenrichtung, sowie bevorzugt um die beiden weiteren kartesischen Achsen, die senkrecht aufeinander und auf der definierten Drehachse stehen, wird bevorzugt durch eine Plananlage des Prüfvorrichtungshalters an dem Schlittenteil festgelegt.

Gemäß einer Weiterbildung der Erfindung ist vorgesehen, dass ein Element, ausgewählt aus dem Lagebestimmungselement und dem Gegenlagebestimmungselement, einen Lagestift aufweist, wobei das andere Element, ausgewählt aus dem Gegenlagebestimmungselement und dem Lagebestimmungselement, eine Lagestiftaufnahme aufweist, die eingerichtet ist, um den Lagestift - insbesondere formschlüssig - aufzunehmen. Somit greift der Lagestift - insbesondere formschlüssig - in montiertem Zustand in die Lagestiftaufnahme, und legt damit die Lage des Prüfvorrichtungshalters relativ zu dem Schlittenteil sowohl in Hochrichtung als auch in Breitenrichtung fest, gestattet aber eine Drehung um die durch die Längsachse des Lagestifts definierte Drehachse. Auf diese Weise wird die relative Lage des Prüfvorrichtungshalters relativ zu dem Schlittenteil sehr einfach und mit kostengünstig herstellbaren Elementen zumindest teilweise festgelegt.

Die Lagestiftaufnahme ist vorzugsweise als Bohrung ausgebildet. Insbesondere ist die Lagestiftaufnahme bevorzugt als Bohrung ausgebildet, die bezüglich ihrer Form und Größe auf den Lagestift abgestimmt ist, sodass dieser formschlüssig in der Bohrung aufgenommen werden kann.

Besonders bevorzugt weist das Lagebestimmungselement die Lagestiftaufnahme auf, die insbesondere als Bohrung ausgebildet ist, und das Gegenlagebestimmungselement weist den Lagestift auf, der insbesondere formschlüssig in der Lagestiftaufnahme aufgenommen werden kann, insbesondere in der Bohrung.

Gemäß einer Weiterbildung der Erfindung ist vorgesehen, dass das Lagebestimmungselement zumindest entlang einer Richtung mittig an dem Prüfvorrichtungshalter angeordnet ist. Auf diese Weise kann der Prüfvorrichtungshalter besonders stabil an dem Schlittenteil angeordnet werden, wobei auch die Winkellage des Prüfvorrichtungshalters relativ zu dem Schlittenteil um die Drehachse in besonders einfacher und stabiler Weise definiert werden kann. Besonders bevorzugt ist hierzu das Lagebestimmungselement in Breitenrichtung mittig an dem Prüfvorrichtungshalter angeordnet, besonders bevorzugt in einem Schwerpunkt oder auf einer Schwerachse des Prüfvorrichtungshalters. In diesem Fall greifen unabhängig von einer momentanen Winkellage des Prüfvorrichtungshalters um die Drehachse keine Kippmomente an diesem an, sodass der Winkel des Prüfvorrichtungshalters um die Drehachse relativ zu dem Schlittenteil kräftefrei justiert werden kann. Dies erlaubt eine hochgenaue, stabile und besonders reproduzierbare Justierung dieses Winkels.

Gemäß einer Weiterbildung der Erfindung ist vorgesehen, dass eine Vorrichtung, ausgewählt aus der ersten Winkeljustiervorrichtung und der zweiten Winkeljustiervorrichtung, eine Justierzunge aufweist, wobei die andere Vorrichtung, ausgewählt aus der zweiten Winkeljustiervorrichtung und der ersten Winkeljustiervorrichtung, eine Zungenaufnahme mit zwei lateralen Einfassungen aufweist, wobei die Justierzunge zwischen den lateralen Einfassungen der Zungenaufnahme anordenbar und verschwenkbar ist, um den Winkel zwischen dem Prüfvorrichtungshalter und dem Schlittenteil um die Drehachse zu justieren. Dies stellt eine mechanisch besonders einfache Ausgestaltung der Winkeljustiervorrichtungen dar, die präzise und zugleich kostengünstig gefertigt werden kann und gleichwohl eine hochgenaue Justierung erlaubt. Die lateralen Einfassungen sind insbesondere - in Breitenrichtung gesehen - seitliche Einfassungen, welche die Zungenaufnahme - in Breitenrichtung - seitlich begrenzen. Insbesondere bilden die beiden lateralen Einfassungen Anschläge für die Justierzunge in der Zungenaufnahme. Besonders bevorzugt sind die lateralen Einfassungen als Schultern ausgebildet.

Besonders bevorzugt weist die zweite Winkeljustiervorrichtung des Schlittenteils die Zungenaufnahme mit den beiden lateralen Einfassungen auf, wobei die erste Winkeljustiervorrichtung des Prüfvorrichtungshalters die Justierzunge aufweist, die in montiertem Zustand in die Zungenaufnahme eingreift.

Gemäß einer Weiterbildung der Erfindung ist vorgesehen, dass in oder an zumindest einer lateralen Einfassung der zwei lateralen Einfassungen ein - insbesondere erster - Justierstift in lateraler Richtung, das heißt in Breitenrichtung, verlagerbar angeordnet ist, wobei der Justierstift in die Zungenaufnahme bereichsweise eingreift, um die Justierzunge zu verschwenken, wenn der Justierstift in lateraler Richtung verlagert wird. Der Justierstift kann somit insbesondere die Justierzunge in der Zungenaufnahme mit einer Kraft beaufschlagen und entlang der Breitenrichtung in eine Richtung drängen. Die Justierzunge - und auch die Justieraufnahme - ist/sind insbesondere radial, vorzugsweise in Hochrichtung, von dem Lagebestimmungselement und dem Gegenlagebestimmungselement beabstandet, sodass mittels des Justierstifts ein Drehmoment um die Drehachse in die Justierzunge einleitbar ist.

In oder an der anderen lateralen Einfassung der beiden lateralen Einfassungen ist bevorzugt ein zweiter Justierstift angeordnet, der ebenfalls in lateraler Richtung verlagerbar ist, und der auf der anderen - in Breitenrichtung gegenüberliegenden Seiten in die Zungenaufnahme eingreift, um die Justierzunge zu verschwenken, wenn der zweite Justierstift in lateraler Richtung verlagert wird. Auf diese Weise kann durch laterale Verlagerung des ersten Justierstifts und des zweiten Justierstifts der Winkel des Prüfvorrichtungshalters relativ zu dem Schlittenteil eingestellt und zumindest vorfixiert werden, indem insbesondere die Justierzunge zwischen den beiden Justierstiften vorteilhaft eingespannt wird.

Alternativ ist es möglich, dass an der anderen lateralen Einfassung, die nicht den ersten Justierstift aufweist, ein Federelement angeordnet ist, wobei eine Justierung der Justierzunge durch Verlagern des ersten Justierstifts in laterale Richtung gegen die Vorspannkraft des Federelements erfolgen kann. Auch auf diese Weise kann eine Drehung des Prüfvorrichtungshalters um die Drehachse in beide Orientierungen, insbesondere sowohl im Uhrzeigersinn als auch gegen den Uhrzeigersinn, bewirkt werden. Dabei wird in dem einen Fall die Justierzunge durch den Justierstift gegen das Federelement verlagert, dessen Vorspannung dadurch erhöht wird. In dem anderen Fall drängt die Vorspannkraft des Federelements die Justierzunge gegen den Justierstift, sodass die Justierzunge diesem folgt. Zur Justierung bedarf es hierbei vorteilhaft nur der Betätigung eines Justierstifts.

Gemäß einer Weiterbildung der Erfindung ist der wenigstens eine Justierstift als Justierschraube ausgebildet. Vorzugsweise kämmt der als Justierschraube ausgebildete Justierstift mit einem Gewinde der dem Justierstift zugeordneten lateralen Einfassung. Insbesondere durchgreift der Justierstift bevorzugt eine in der lateralen Einfassung ausgebildete, die laterale Einfassung in lateraler Richtung, insbesondere in Breitenrichtung, durchgreifende Gewindebohrung. Die Ausgestaltung des Justierstifts als Justierschraube stellt eine besonders einfache, kostengünstig zu fertigende und leicht zu bedienende Ausgestaltung eines Justierstifts dar.

Gemäß einer Weiterbildung der Erfindung ist vorgesehen, dass das Fixierelement als Langloch ausgebildet ist, wobei das Gegenfixierelement als wenigstens eine Schraubbohrung ausgebildet ist. Dabei erlaubt das als Langloch ausgebildete Fixierelement eine Winkeljustage des Prüfvorrichtungshalters an dem Schlittenteil. Die Schraubbohrung des Gegenfixierelements ist vorzugsweise als Gewindebohrung ausgebildet.

In besonders bevorzugter Ausgestaltung weist das Gegenfixierelement zwei - zueinander insbesondere in Breitenrichtung versetzte - Schraubbohrungen auf. Auf diese Weise ist eine besonders stabile Befestigung des Prüfvorrichtungshalters an dem Schlittenelement möglich.

Indem eine Schraube einerseits in das als Langloch ausgebildete Fixierelement und andererseits in das als wenigstens eine Schraubbohrung ausgebildete Gegenfixierelement eingreift, kann der Prüfvorrichtungshalter in besonders einfacher Weise an dem Schlittenteil fixiert werden.

Gemäß einer Weiterbildung der Erfindung ist vorgesehen, dass die Befestigungsanordnung eine Unterlegscheibe mit wenigstens einer Durchgangsbohrung aufweist, wobei die Unterlegscheibe eingerichtet ist, um in montiertem Zustand das Langloch an dem Prüfvorrichtungshalter zu überdecken. Die Durchgangsbohrung ist insbesondere eingerichtet, um von einer Schraube durchgriffen zu werden. Vorzugsweise weist die Unterlegscheibe zwei solcher Durchgangsbohrungen auf, die in montiertem Zustand insbesondere mit den beiden zueinander in Breitenrichtung versetzten Schraubbohrungen des Gegenfixierelements fluchten, sodass jeweils eine Schraube die Unterlegscheibe, das Langloch und die ihr zugeordnete Schraubbohrung durchgreift. Mittels der Unterlegscheibe ergibt sich eine besonders günstige Kraftverteilung bei der Fixierung des Prüfvorrichtungshalters an dem Schlittenteil. Besonders bevorzugt ist die Unterlegscheibe in eine Vertiefung des Prüfvorrichtungshalters eingelegt, sodass sie - in Tiefenrichtung gesehen - nicht aufträgt.

Gemäß einer Weiterbildung der Erfindung ist vorgesehen, dass der Prüfvorrichtungshalter eine Planfläche aufweist, wobei das Schlittenteil eine Gegenplanfläche aufweist, wobei die Planfläche und die Gegenplanfläche eingerichtet - und vorzugsweise aufeinander abgestimmt - sind, um in montiertem Zustand des Prüfvorrichtungshalters an dem Schlittenteil flächig, insbesondere vollflächig, aneinander anzuliegen. Die Planfläche und die Gegenplanfläche sind in montiertem Zustand vorzugsweise so ausgerichtet, dass die Drehachse auf ihnen senkrecht steht, also parallel zu einem Normalenvektor der Planfläche und der Gegenplanfläche orientiert ist, wobei die Hochrichtung einerseits und die Breitenrichtung andererseits bevorzugt in einer Ebene liegen, die parallel zu der Planfläche und der Gegenplanfläche ausgerichtet ist oder mit der Planfläche und/oder der Gegenplanfläche zusammenfällt.

Durch die flächige, insbesondere vollflächige Anlage der Planfläche an der Gegenplanfläche kann die translatorische Lage des Prüfvorrichtungshalters relativ zu dem Schlittenteil in Tiefenrichtung, sowie die Winkellage des Prüfvorrichtungshalters relativ zu dem Schlittenteil um die beiden verbleibenden, senkrecht auf der Drehachse stehenden, weiteren Rotationsachsen, festgelegt werden.

Somit legen das Lagebestimmungselement und das Gegenlagebestimmungselement zwei Translationsrichtungen fest, wobei die erste Winkeljustiervorrichtung und die zweite Winkeljustiervorrichtung eine Rotationsrichtung festlegen. Die Planfläche und die Gegenplanfläche legen zusätzlich die dritte Translationsrichtung, sowie die verbleibenden beiden Rotationsrichtungen fest, sodass im Ergebnis alle Freiheitsgrade des Prüfvorrichtungshalters relativ zu dem Schlittenteil definiert sind.

Die Drehachse erstreckt sich insbesondere entlang der Tiefenrichtung, die beiden verbleibenden Rotationsachsen sind somit insbesondere die Hochrichtung und die Breitenrichtung.

Gemäß einer Weiterbildung der Erfindung ist vorgesehen, dass das Schlittenteil mittels einer Mehrzahl von Schlittenlagestiften und/oder wenigstens einer Verschraubung, vorzugsweise einer Mehrzahl von Verschraubungen, besonders bevorzugt mittels sechs Verschraubungen, lagefest mit einem Schlitten der Kraftmesseinrichtung verbunden ist. Insbesondere ist das Schlittenteil bevorzugt auf einer Grundplatte des Schlittens befestigt, insbesondere an die Grundlatte geschraubt. Auf diese Weise kann das Schlittenteil zum Nachrüsten bestehender Kraftmesseinrichtungen eingerichtet sein, indem dieses an dem Schlitten einer vorhandenen Kraftmesseinrichtung befestigt wird. Somit können bereits vorhandene Kraftmesseinrichtungen für eine besonders sichere, stabile und reproduzierbare Anordnung des Prüfvorrichtungshalters ausgerüstet werden.

Gemäß einer Weiterbildung der Erfindung ist vorgesehen, dass der Prüfvorrichtungshalter einen Prüfbalken aufweist, an dem die wenigstens eine Prüfvorrichtung befestigbar, oder bevorzugt befestigt ist. Insbesondere sind an dem Prüfbalken bevorzugt drei Prüfvorrichtungen befestigbar oder befestigt.

Vorzugsweise erstreckt sich der Prüfbalken in Breitenrichtung, wobei eine Mehrzahl von Prüfvorrichtungen, insbesondere drei Prüfvorrichtungen, in Breitenrichtung zueinander versetzt nebeneinander an dem Prüfbalken befestigbar oder befestigt sind. Der Prüfbalken ist vorzugsweise in Tiefenrichtung gesehen von einer Befestigungsplatte des Prüfvorrichtungshalters beabstandet gehalten oder ragt in Tiefenrichtung von der Befestigungsplatte ab. Die Befestigungsplatte weist insbesondere das Lagebestimmungselement, die erste Winkeljustiervorrichtung und das Fixierelement auf, oder diese Elemente sind an der Befestigungsplatte angeordnet oder ausgebildet.

Gemäß einer Weiterbildung der Erfindung ist vorgesehen, dass der Prüfbalken wenigstens eine Haltebohrung zur Befestigung der wenigstens eine Prüfvorrichtung aufweist. In ebenso vorteilhafter wie einfacher Weise kann dabei die Prüfvorrichtung die Haltebohrung durchgreifen und hierdurch an dem Prüfbalken befestigt sein. Besonders bevorzugt weist der Prüfbalken drei solcher Haltebohrungen zur Befestigung von jeweils einer Prüfvorrichtung, insgesamt also von drei Prüfvorrichtungen, auf.

Gemäß einer Weiterbildung der Erfindung ist vorgesehen, dass die Befestigungsanordnung eine Schutzabdeckung aufweist, die an dem Prüfvorrichtungshalter befestigbar, vorzugsweise befestigt, und gemeinsam mit dem Prüfvorrichtungshalter an dem Kraftmessturm verlagerbar ist, wenn der Prüfvorrichtungshalter an dem Kraftmessturm befestigt ist. Die Schutzabdeckung ist insbesondere eingerichtet, um die an dem Prüfvorrichtungshalter angeordnete Prüfvorrichtung, oder die Prüfvorrichtungen, zu übergreifen, wobei sie insbesondere dann, wenn eine Probe mittels der Prüfvorrichtung untersucht wird, auch die Probe übergreift, sodass ein Nutzer bei einer eventuellen Beschädigung der Probe und/oder der Prüfvorrichtung geschützt ist. Insbesondere verhindert die Schutzabdeckung bei einem Bersten der Probe, dass Splitter der Probe in Richtung des Nutzers gelangen und diesen verletzen. Da die Schutzabdeckung an dem Prüfvorrichtungshalter befestigt und gemeinsam mit diesem verlagerbar ist, kann sie vergleichsweise klein ausgebildet sein. Insbesondere bedarf es keiner Anordnung der vollständigen Kraftmesseinrichtung innerhalb eines großen, teuren und umständlich zu bedienenden Schutzgehäuses.

Gemäß einer Weiterbildung der Erfindung ist vorgesehen, dass die Schutzabdeckung an dem Prüfvorrichtungshalter relativ zu diesem in Hochrichtung des Kraftmessturms verlagerbar anordenbar, vorzugsweise angeordnet ist. Dies stellt einen effektiven Klemmschutz für den Nutzer dar, falls dieser mit einer Extremität, beispielsweise mit den Fingern, zwischen die Schutzabdeckung und einen weiteren Teil der Kraftmesseinrichtung gerät. Die Schutzabdeckung kann dann relativ zu dem Prüfvorrichtungshalter in Hochrichtung verlagert werden, sodass die Extremität des Nutzers nicht geklemmt wird, selbst wenn der Prüfvorrichtungshalter weiter in Hochrichtung auf die Extremität zu verlagert wird. Die Schutzabdeckung ist relativ zu dem Prüfvorrichtungshalter insbesondere unter Vorspannung verlagerbar, sodass sie in einer stabilen, definierten Position relativ zu dem Prüfvorrichtungshalter gehalten ist, solange kein Widerstand - beispielweise eine Nutzerextremität - die Verlagerung der Schutzabdeckung gemeinsam mit dem Prüfvorrichtungshalter verhindert. Besonders bevorzugt ist die Schutzabdeckung in Führungsschienen, insbesondere Gleitschienen, verlagerbar gehalten, wobei die Führungsschienen, insbesondere Gleitschienen, an dem Prüfvorrichtungshalter angeordnet oder ausgebildet sind. Es ist aber auch möglich, dass die Schutzabdeckung selbst solche Führungsschienen, insbesondere Gleitschienen, aufweist, in welche dann ein geeigneter Führungsvorsprung, insbesondere jeweils ein geeigneter Führungsvorsprung, des Prüfvorrichtungshalters eingreift.

Gemäß einer Weiterbildung der Erfindung ist vorgesehen, dass die Schutzabdeckung eine transparente Scheibe oder eine transparente Einfassung, insbesondere aus Polycarbonat, insbesondere Makrolon, insbesondere aus glasklarem Polycarbonat, aufweist, oder als transparente Scheibe oder transparente Einfassung, insbesondere aus Polycarbonat, insbesondere Makrolon, insbesondere aus glasklarem Polycarbonat, ausgebildet ist. Auf diese Weise kann die Schutzabdeckung sowohl stabil als auch transparent, insbesondere durchsichtig sein, sodass der Nutzer die Probe während der Prüfung durch die Schutzabdeckung hindurch beobachten kann.

Die Aufgabe wird auch gelöst, indem eine Kraftmesseinrichtung geschaffen wird, welche eine erfindungsgemäße Befestigungsanordnung oder eine Befestigungsanordnung gemäß einem der zuvor beschriebenen Ausführungsbeispiele aufweist. In Zusammenhang mit der Kraftmesseinrichtung verwirklichen sich insbesondere die Vorteile, die bereits in Zusammenhang mit der Befestigungsanordnung erläutert wurden.

Gemäß einer Weiterbildung der Erfindung ist vorgesehen, dass die Kraftmesseinrichtung eingerichtet ist zur Messung von Zug- und/oder Druckkräften an medizinischen Hohlkörpern. Insbesondere in Zusammenhang mit einer solchen Ausgestaltung verwirklichen sich die zuvor beschriebenen Vorteile.

Die Aufgabe wird auch gelöst, indem ein Prüfvorrichtungshalter geschaffen wird, der wenigstens ein Lagebestimmungselement, eine Winkeljustiervorrichtung sowie wenigstens ein Fixierelement aufweist, wobei der Prüfvorrichtungshalter eingerichtet ist zur Verwendung als Prüfvorrichtungshalter einer erfindungsgemäßen Befestigungsanordnung oder einer Befestigungsanordnung nach einem der zuvor beschriebenen Ausführungsbeispiele. Dabei verwirklichen sich in Zusammenhang mit dem Prüfvorrichtungshalter insbesondere die Vorteile, die zuvor bereits in Zusammenhang mit der Befestigungsanordnung beschrieben wurden. Insbesondere weist der Prüfvorrichtungshalter wenigstens ein Merkmal, vorzugsweise eine Kombination von Merkmalen, auf, welche zuvor in Zusammenhang mit dem Prüfvorrichtungshalter der erfindungsgemäßen Befestigungsanordnung oder eines Ausführungsbeispiels der Befestigungsanordnung erläutert wurden.

Die Aufgabe wird schließlich auch gelöst, indem ein Schlittenteil geschaffen wird, welches wenigstens ein Gegenlagebestimmungselement, eine Winkeljustiervorrichtung und wenigstens ein Gegenfixierelement aufweist, wobei das Schlittenteil eingerichtet ist zur Verwendung als Schlittenteil einer erfindungsgemäßen Befestigungsanordnung oder einer Befestigungsanordnung nach einem der zuvor beschriebenen Ausführungsbeispiele. In Zusammenhang mit dem Schlittenteil verwirklichen sich insbesondere die Vorteile, die bereits in Zusammenhang mit der Befestigungsanordnung erläutert wurden. Vorzugsweise weist das Schlittenteil wenigstens ein Merkmal, vorzugsweise eine Kombination von Merkmalen, auf, welche zuvor in Zusammenhang mit dem Schlittenteil der erfindungsgemäßen Befestigungsanordnung oder eines der zuvor beschriebenen Ausführungsbeispiele der Befestigungsanordnung beschrieben wurde.

Die Erfindung wird im Folgenden anhand der Zeichnung näher erläutert. Dabei zeigen:
- Figur 1: eine Darstellung eines Ausführungsbeispiels einer Kraftmesseinrichtung mit einem Prüfvorrichtungshalter, einer Befestigungsanordnung zum Befestigen des Prüfvorrichtungshalters, und einem Schlittenteil;
- Figur 2: eine stirnseitige Ansicht des Ausführungsbeispiels der Kraftmesseinrichtung gemäß Figur 1, und
- Figur 3: eine Detaildarstellung des Ausführungsbeispiels der Kraftmesseinrichtung gemäß Figur 1.

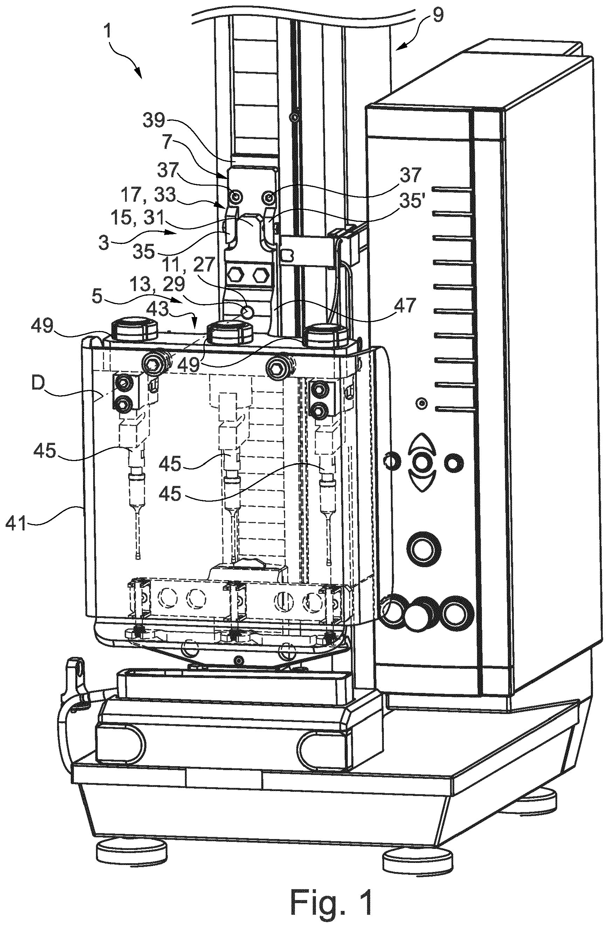

**Fig. 1** zeigt eine Darstellung eines Ausführungsbeispiels einer Kraftmesseinrichtung 1, die eine Befestigungsanordnung 3 zum Befestigen eines Prüfvorrichtungshalters 5 an der Kraftmesseinrichtung 1 aufweist. Die Befestigungsanordnung 3 weist ein Schlittenteil 7 auf, das an einem Kraftmessturm 9 der Kraftmesseinrichtung 1 in Hochrichtung des Kraftmessturms 9 - in Figur 1 in vertikaler Richtung - verlagerbar angeordnet ist. Der Prüfvorrichtungshalter 5 weist wenigstens ein Lagebestimmungselement 11 auf, und das Schlittenteil 7 weist wenigstens ein Gegenlagebestimmungselement 13 auf. Das Lagebestimmungselement 11 und das Gegenlagebestimmungselement 13 sind eingerichtet, um eine Lage des Prüfvorrichtungslagers 5 relativ zu dem Schlittenteil 7 in zumindest einer Richtung, ausgewählt aus einer Hochrichtung des Kraftmessturms 9, in Figur 1 also der vertikalen Richtung, und einer Richtung senkrecht zu der Hochrichtung, festzulegen und dabei zugleich eine Drehung des Prüfvorrichtungshalters 5 relativ zu dem Schlittenteil 7 um eine durch das Lagebestimmungselement 11 und/oder das Gegenlagebestimmungselement 13 definierte Drehachse D zu gestatten. Bei dem hier dargestellten Ausführungsbeispiel wirken das Lagebestimmungselement 11 und das Gegenlagebestimmungselement 13 derart zusammen, dass die Lage des Prüfvorrichtungshalters 5 relativ zu dem Schlittenteil 7 entlang zweier Richtungen festgelegt wird, nämlich in Hochrichtung und in Breitenrichtung, wobei sich die Breitenrichtung in Figur 1 aufgrund der perspektivischen Ansicht geringfügig von der Horizontalen abweichend von leicht links oben nach leicht rechts unten erstreckt. Die Drehachse D, die durch das Lagebestimmungselement 11 einerseits und das Gegenlagebestimmungselement 13 andererseits definiert wird, steht hier schräg auf der Bildebene - aufgrund der leicht schrägen Ansicht - und insbesondere senkrecht auf einer Ebene, die einerseits von der Breitenrichtung und andererseits von der Hochrichtung aufgespannt wird. Die Drehachse D erstreckt sich somit insbesondere in Tiefenrichtung der Kraftmesseinrichtung 1.

Der Prüfvorrichtungshalter 5 weist außerdem eine erste Winkeljustiervorrichtung 15 auf, wobei das Schlittenteil 7 eine zweite Winkeljustiervorrichtung 17 aufweist. Dabei sind die Winkeljustiervorrichtungen 15, 17 eingerichtet und insbesondere aufeinander abgestimmt, um einen Winkel des Prüfvorrichtungshalters 5 relativ zu dem Schlittenteil 7 um die Drehachse D zu justieren und vorzugsweise festzulegen.

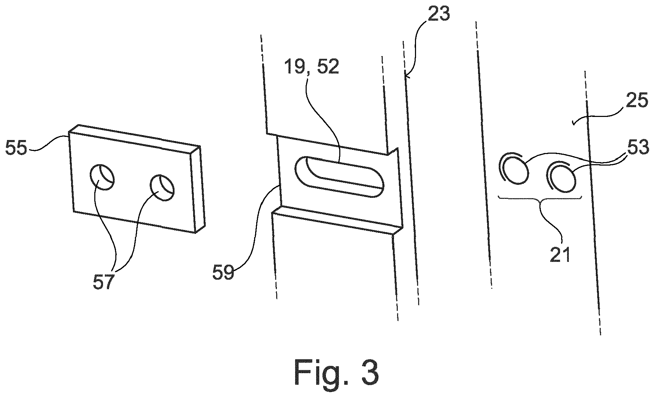

Der Prüfvorrichtungshalter 5 weist außerdem wenigstens ein Fixierelement 19 auf, wobei das Schlittenteil 7 wenigstens ein Gegenfixierelement 21 aufweist, das Fixierelement 19 und das Gegenfixierelement 21 sind eingerichtet und insbesondere aufeinander abgestimmt, um den Prüfvorrichtungshalter 5 an dem Schlittenteil 7 zu fixieren. Das Fixierelement 19 und das Gegenfixierelement 21 sind in Figur 3 dargestellt und näher erläutert. Sie sind insbesondere eingerichtet, um den Prüfvorrichtungshalter 5 an dem Schlittenteil 7 zu arretieren, und dabei vorzugsweise die Lage des Prüfvorrichtungshalters 5 an dem Schlittenteil 7, insbesondere den Drehwinkel um die Drehachse D, eindeutig festzulegen.

Mittels des Lagebestimmungselements 11 und des Gegenlagebestimmungselements 13 ist es möglich, den Prüfvorrichtungshalter 5 an dem Schlittenteil 7 und relativ zu dem Schlittenteil 7 in einer linearen Richtung festzulegen, wobei anschließend eine Winkelausrichtung des Prüfvorrichtungshalters 5 relativ zu dem Schlittenteil 7 und damit zugleich relativ zu der Hochrichtung des Kraftmessturms 9 durch Drehen des Prüfvorrichtungshalters 5 um die Drehachse D möglich ist. Hierzu werden vorteilhaft die Winkeljustiervorrichtungen 15, 17 verwendet, die besonders bevorzugt zugleich verwendet werden können, um den Winkel festzulegen. Schließlich kann die Position des Prüfvorrichtungshalters 5 an dem Schlittenteil 7 mittels des Fixierelements 19 und des Gegenfixierelements 21 fixiert werden, sodass sie auch bei einem Gebrauch der Kraftmesseinrichtung 1 unveränderlich bleibt. Mithilfe der hier vorgeschlagenen Befestigungsanordnung 3 ist es somit möglich, den Prüfvorrichtungshalter 5 sicher, stabil und reproduzierbar an der Kraftmesseinrichtung 1 auszurichten und festzulegen.

Eine dritte Translationsrichtung in Tiefenrichtung der Kraftmesseinrichtung 1, sowie zwei weitere Drehrichtungen um zwei aufeinander und auf der Drehachse D senkrecht stehende Rotationsachsen, werden durch eine plane Anlage des Prüfvorrichtungshalters 5 an dem Schlittenteil 7, insbesondere einer in Figur 3 dargestellten Planfläche 23 des Prüfvorrichtungshalters 5 an einer Gegenplanfläche 25 des Schlittenteils 7 bewirkt. Dabei liegen die Planfläche 23 und die Gegenplanfläche 25 flächig, insbesondere vollflächig aneinander an. Auf diese Weise kann die Orientierung des Prüfvorrichtungshalters 5 relativ zu dem Schlittenteil 7 vollständig festgelegt werden, wobei alle Freiheitsgrade bestimmt sind.

Das Lagebestimmungselement 11 weist bei dem hier dargestellten Ausführungsbeispiel eine Lagestiftaufnahme 27, insbesondere in Form einer Bohrung, auf. In der Lagestiftaufnahme 27 ist das Gegenlagebestimmungselement 13 vorzugsweise formschlüssig aufnehmbar, wobei das Gegenlagebestimmungselement 13 hier als Lagestift 29 ausgebildet ist. Der Lagestift 29 und die Lagestiftaufnahme 27 sind dabei so aufeinander abgestimmt, dass der Lagestift 29 formschlüssig in der Lagestiftaufnahme 27 angeordnet werden kann.

Das Lagebestimmungselement 11 ist hier zumindest in Breitenrichtung an dem Prüfvorrichtungshalter 5 mittig angeordnet. Besonders bevorzugt ist das Lagebestimmungselement 11, hier die Lagestiftaufnahme 27, in einem Schwerpunkt oder auf einer Schwerachse des Prüfvorrichtungshalters 5 angeordnet. Somit kann eine momentenfreie Lagerung des Prüfvorrichtungshalters 5 an dem Schlittenteil 7 mittels des Lagebestimmungselements 11 bewirkt werden, wobei eine kräftefreie Justage des Winkels um die Drehachse D mittels der Winkeljustiervorrichtung 15, 17 möglich ist. Insbesondere wirken keine schwerkraftbedingten Kippmomente auf den Prüfvorrichtungshalter 5, wenn dieser mittels des Lagebestimmungselements 11 an dem Schlittenteil 7 angeordnet ist.

Die erste Winkeljustiervorrichtung 15 weist hier eine Justierzunge 31 auf, wobei die zweite Winkeljustiervorrichtung 17 eine Zungenaufnahme 33 mit zwei lateralen Einfassungen 35, 35' aufweist, wobei die Justierzunge 31 in der Zungenaufnahme 33 zwischen den lateralen Einfassungen 35, 35' angeordnet und verschwenkbar ist, um den Winkel zwischen dem Prüfvorrichtungshalter 5 und dem Schlittenteil 7 zu justieren. Dabei bilden die lateralen Einfassungen 35, 35` insbesondere Anschläge, insbesondere in Form von Schultern, für die Justierzunge 31.

Das Schlittenteil 7 ist bevorzugt durch Schlittenlagestifte und/oder wenigstens eine Verschraubung, hier insbesondere durch sechs Schrauben 37, von denen nur zwei in Figur 1 sichtbar sind, lagefest mit einem Schlitten 39 der Kraftmesseinrichtung 1 verbunden. Insbesondere ist das Schlittenteil 7 bevorzugt auf eine Grundplatte des Schlittens 39 aufgeschraubt.

Die Befestigungsanordnung 3 weist außerdem eine Schutzabdeckung 41 auf, die an dem Prüfvorrichtungshalter 5 befestigt und gemeinsam mit dem Prüfvorrichtungshalter 5 an dem Kraftmessturm 1 verlagerbar ist. Die Schutzabdeckung 41 dient dabei insbesondere dem Schutz eines Bedieners der Kraftmesseinrichtung 1 während einer Kraftmessung, insbesondere einem Splitter- oder Berstschutz. Die Schutzabdeckung 41 ist bevorzugt relativ zu dem Prüfvorrichtungshalter 5 in Hochrichtung des Kraftmessturms 1 - insbesondere unter Vorspannung - verlagerbar angeordnet. Insbesondere ist sie bevorzugt an dem Prüfvorrichtungshalter 5 in Führungsschienen, vorzugsweise Gleitschienen, verlagerbar geführt. Auf diese Weise kann die Schutzabdeckung 41 ausweichen, wenn sie in Kontakt mit einer Extremität eines Bedieners, insbesondere mit einem Finger oder einer Hand, kommt, selbst wenn der Prüfvorrichtungshalter 5 weiter auf die Extremität zu verlagert wird. Somit wird effektiv ein Einklemmen der Extremität und damit eine Verletzung des Bedieners vermieden.

Die Schutzabdeckung 41 ist bevorzugt als transparente Scheibe oder als transparente Einfassung ausgebildet, wobei sie besonders bevorzugt Polycarbonat, insbesondere Makrolon, insbesondere glasklares Polycarbonat, aufweist oder aus Polycarbonat, insbesondere Makrolon, insbesondere aus glasklarem Polycarbonat, besteht.

Der Prüfvorrichtungshalter 5 weist einen Prüfbalken 43 auf, an dem wenigstens eine Prüfvorrichtung 45, hier drei Prüfvorrichtungen 45, befestigt sind. Der Prüfbalken 43 ragt dabei in Tiefenrichtung der Kraftmesseinrichtung 1 von einer Befestigungsplatte 47 ab, und er erstreckt sich in Breitenrichtung der Kraftmesseinrichtung 1.

Insbesondere weist der Prüfbalken 43 wenigstens eine Haltebohrung 49, hier drei Haltebohrungen 49 zur Befestigung der Prüfvorrichtungen 45 auf.

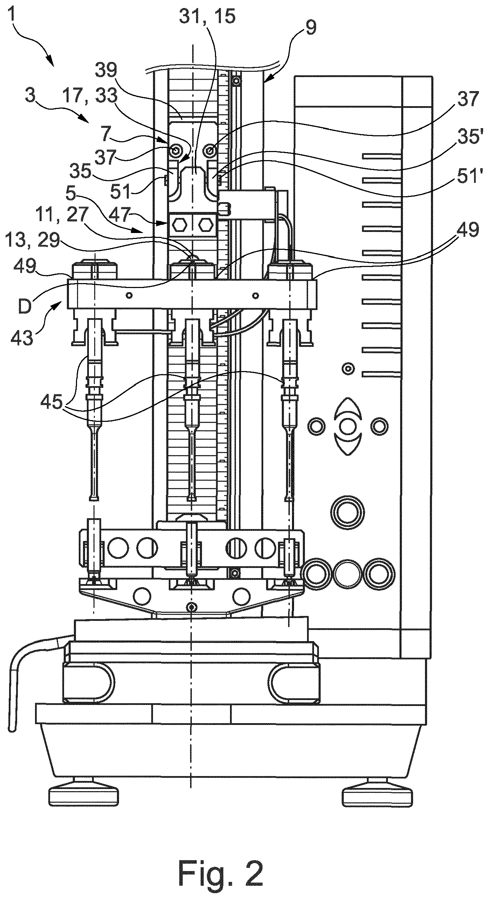

**Fig. 2** zeigt eine stirnseitige Ansicht der Kraftmesseinrichtung 1 gemäß Figur 1 ohne die Schutzabdeckung 41. Gleiche und funktionsgleiche Elemente sind in allen Figuren mit gleichen Bezugszeichen versehen, sodass insoweit jeweils auf die vorangegangene Beschreibung verwiesen wird.

In jeder der lateralen Einfassungen 35, 35' ist hier jeweils ein Justierstift 51, 51' in lateraler Richtung, das heißt in Breitenrichtung, das wiederum heißt in Figur 2 in horizontaler Richtung, verlagerbar angeordnet, wobei die Justierstifte 51, 51' jeweils in die Zungenaufnahme 33 eingreifen, um die Justierzunge 31 zu verschwenken, wenn die Justierstifte 51, 51' in lateraler Richtung verlagert werden. Bevorzugt sind die Justierstifte 51, 51' als Justierschrauben ausgebildet, die ein Außengewinde aufweisen, das jeweils mit einem entsprechenden Innengewinde der jeweils zugeordneten lateralen Einfassung 35, 35 ` kämmt.

Es ist alternativ allerdings auch möglich, dass nur eine der lateralen Einfassungen 35, 35` einen Justierstift 51, 51' aufweist, während die andere laterale Einfassung 35', 35 der lateralen Einfassungen 35, 35` ein Federelement aufweist, das entsprechend die Justierzunge 31 auf einer dem Justierstift 51, 51' gegenüberliegenden Seite abstützt und eine Verlagerung entgegen einer Vorspannung des Federelements durch Einschrauben des Justierstifts 51, 51' erlaubt, während es aufgrund seiner Vorspannung bewirkt, dass die Justierzunge 31 gemeinsam mit dem Justierstift 51, 51' verlagert wird, also diesem folgt, wenn der Justierstift 51, 51' weiter aus der Zungenaufnahme 33 hinausgeschraubt wird. Diese Ausgestaltung ist letztlich einfacher zu bedienen als die in Figur 2 dargestellte Ausgestaltung, da lediglich ein Justierstift schraubend betätigt werden muss, während das Ausführungsbeispiel gemäß Figur 2 stets die Betätigung beider Justierstifte 51, 51' voraussetzt. Dabei erlaubt aber das Ausführungsbeispiel gemäß Figur 2 eine stabilere, insbesondere deutlich weniger schwingungsanfällige Fixierung des Prüfvorrichtungshalters 5, da die Justierzunge 31 sicher, fest und stabil zwischen den beiden Justierstiften 51, 51' in der vorbestimmten Winkellage eingespannt werden kann.

**Fig. 3** zeigt eine schematische Explosionsdarstellung eines Details des Prüfvorrichtungshalters 5 einerseits und des Schlittenteils 7 andererseits.

Dabei wird hier deutlich, dass das Fixierelement 19 als Langloch ausgebildet ist, wobei das Gegenfixierelement 21 als wenigstens eine Schraubbohrung 53, hier insbesondere als zwei Schraubbohrungen 53 ausgebildet ist. Die Schraubbohrungen 53 sind insbesondere als Gewindebohrungen ausgebildet.

Insbesondere sind die Schraubbohrungen 53 relativ zueinander in Breitenrichtung der Kraftmesseinrichtung 1 versetzt.

Die Befestigungsanordnung 3 weist außerdem eine Unterlegscheibe 55 auf, die wenigstens eine Durchgangsbohrung 57, hier zwei Durchgangsbohrungen 57 aufweist. Die Durchgangsbohrungen 57 sind dabei bezüglich ihrer Größe und bezüglich ihres Abstands zueinander auf die Schraubbohrungen 53 abgestimmt, sodass sie in montiertem Zustand mit den Schraubbohrungen 53 fluchten.

Die Unterlegscheibe 55 ist eingerichtet, um in montiertem Zustand das Langloch 52 zu überdecken. Dabei weist der Prüfvorrichtungshalter 5 - insbesondere an der Befestigungsplatte 47 - vorzugsweise eine Vertiefung 59 auf, in welche die Unterlegscheibe 55 eingelegt werden kann. Mittels zweier nicht dargestellter Befestigungsschrauben wird dann bevorzugt der Prüfvorrichtungshalter 5 an dem Schlittenteil 7 fixiert, indem sich die Befestigungsschrauben durch die Durchgangsbohrungen 57 der Unterlegscheibe 55 und das Langloch 52 schließlich in die Schraubbohrungen 53 hinein erstrecken und dort eingeschraubt sind. Die Unterlegscheibe 55 erlaubt dabei eine verbesserte Kraftverteilung der Fixierkräfte.

Das Langloch 52 einerseits und die Vertiefung 59 sowie die Unterlegscheibe 55 andererseits sind bevorzugt so bemessen, dass eine Justierung des Prüfvorrichtungshalters 5 an dem Schlittenteil 7 insbesondere bezüglich der Winkellage um die Drehachse D möglich ist, auch wenn die Befestigungsschrauben bereits locker in die Schraubbohrungen 53 eingedreht sind. Dabei ist insbesondere die Vertiefung 59 etwas größer als es zur Aufnahme der Unterlegscheibe 55 erforderlich ist, wobei auch das Langloch bevorzugt größer ist, als es zum einen dem Durchmesser und zum anderen dem größten Breitenabstand der Befestigungsschrauben entspricht.

Ist der Prüfvorrichtungshalter 5 - insbesondere bezüglich des Winkels um die Drehachse - an dem Schlittenteil 7 justiert, kann er durch Festziehen der Befestigungsschrauben in den Schraubbohrungen 53 sicher und stabil an dem Schlittenteil 7 fixiert werden.

Insgesamt ist mit der hier vorgeschlagenen Befestigungsanordnung 3, der Kraftmesseinrichtung 1, dem Prüfvorrichtungshalter 5 und dem Schlittenteil 7 eine Möglichkeit geschaffen, den Prüfvorrichtungshalter 5 sicher, stabil und reproduzierbar an der Kraftmesseinrichtung 1 auszurichten und festzulegen.

## Patentansprüche

1. Befestigungsanordnung (3) zum Befestigen eines Prüfvorrichtungshalters (5) an einer Kraftmesseinrichtung (1), mit
- einem Prüfvorrichtungshalter (5), und
- einem Schlittenteil (7), das an einem Kraftmessturm (9) einer Kraftmesseinrichtung (1) in Hochrichtung des Kraftmessturms (9) verlagerbar anordenbar oder angeordnet ist, wobei
- der Prüfvorrichtungshalter (5) wenigstens ein Lagebestimmungselement (11) und das Schlittenteil (7) wenigstens ein Gegenlagebestimmungselement (13) aufweisen, wobei
- das Lagebestimmungselement (11) und das Gegenlagebestimmungselement (13) eingerichtet sind, um eine Lage des Prüfvorrichtungshalters (5) relativ zu dem Schlittenteil (7) in zumindest einer Richtung, ausgewählt aus einer Hochrichtung des Kraftmessturms (9) und einer Richtung senkrecht zu der Hochrichtung, festzulegen und zugleich eine Drehung des Prüfvorrichtungshalters (5) relativ zu dem Schlittenteil (7) um eine durch das Lagebestimmungselement (11) und/oder das Gegenlagebestimmungselement (13) definierte Drehachse (D) zu gestatten, wobei
- der Prüfvorrichtungshalter (5) eine erste Winkeljustiervorrichtung (15) und das Schlittenteil (7) eine zweite Winkeljustiervorrichtung (17) aufweisen, die eingerichtet sind, um einen Winkel des Prüfvorrichtungshalters (5) relativ zu dem Schlittenteil (7) um die Drehachse (D) zu justieren und vorzugsweise festzulegen, und wobei
- der Prüfvorrichtungshalter (5) wenigstens ein Fixierelement (19) und das Schlittenteil (7) wenigstens ein Gegenfixierelement (21) aufweisen, wobei
- das Fixierelement (19) und das Gegenfixierelement (21) eingerichtet sind, um den Prüfvorrichtungshalter (5) an dem Schlittenteil (7) zu fixieren.

2. Befestigungsanordnung (3) nach einem der vorhergehenden Ansprüche, **dadurch gekennzeichnet, dass** ein Element, ausgewählt aus dem Lagebestimmungselement (11) und dem Gegenlagebestimmungselement (13), einen Lagestift (29) aufweist, wobei das andere Element, ausgewählt aus dem Gegenlagebestimmungselement (13) und dem Lagebestimmungselement (11), eine Lagestiftaufnahme (27) aufweist, wobei die Lagestiftaufnahme (27) eingerichtet ist, um den Lagestift (29) aufzunehmen.

3. Befestigungsanordnung (3) nach einem der vorhergehenden Ansprüche, **dadurch gekennzeichnet, dass** das Lagebestimmungselement (11) zumindest in einer Richtung mittig an dem Prüfvorrichtungshalter (5) angeordnet ist.

4. Befestigungsanordnung (3) nach einem der vorhergehenden Ansprüche, **dadurch gekennzeichnet, dass** eine Vorrichtung, ausgewählt aus der ersten Winkeljustiervorrichtung (15) und der zweiten Winkeljustiervorrichtung (17) eine Justierzunge (31) aufweist, wobei die andere Vorrichtung, ausgewählt aus der zweiten Winkeljustiervorrichtung (17) und der ersten Winkeljustiervorrichtung (15), eine Zungenaufnahme (33) mit zwei lateralen Einfassungen (35,35') aufweist, wobei die Justierzunge (31) zwischen den lateralen Einfassungen (35,35') anordenbar und verschwenkbar ist, um den Winkel zwischen dem Prüfvorrichtungshalter (5) und dem Schlittenteil (7) um die Drehachse (D) zu justieren.

5. Befestigungsanordnung (3) nach Anspruch 4, **dadurch gekennzeichnet, dass** in oder an zumindest einer lateralen Einfassung (35,35') der lateralen Einfassungen (35,35') ein Justierstift (51,51`) in lateraler Richtung verlagerbar angeordnet ist, der in die Zungenaufnahme (33) eingreift, um die Justierzunge (31) zu verschwenken, wenn der Justierstift (51,51`) in lateraler Richtung verlagert wird.

6. Befestigungsanordnung (3) nach Anspruch 5, **dadurch gekennzeichnet, dass** der Justierstift (51,51`) als Justierschraube ausgebildet ist, die vorzugsweise mit einem Gewinde der dem Justierstift (51,51') zugeordneten lateralen Einfassung (35,35`) kämmt.

7. Befestigungsanordnung (3) nach einem der vorhergehenden Ansprüche, **dadurch gekennzeichnet, dass** das Fixierelement (19) als Langloch (52) ausgebildet ist, wobei das Gegenfixierelement (21) als wenigstens eine Schraubbohrung (53) ausgebildet ist.

8. Befestigungsanordnung (3) nach einem der vorhergehenden Ansprüche, **dadurch gekennzeichnet, dass** das Gegenfixierelement (21) zwei Schraubbohrungen (53) aufweist.

9. Befestigungsanordnung (3) nach einem der Ansprüche 7 oder 8, **dadurch gekennzeichnet, dass** die Befestigungsanordnung (3) eine Unterlegscheibe (55) mit wenigstens einer Durchgangsbohrung (57) aufweist, wobei die Unterlegscheibe (55) eingerichtet ist, um in montiertem Zustand das Langloch (52) an dem Prüfvorrichtungshalter (5) zu überdecken.

10. Befestigungsanordnung (3) nach einem der vorhergehenden Ansprüche, **dadurch gekennzeichnet, dass** der Prüfvorrichtungshalter (5) eine Planfläche (23) aufweist, wobei das Schlittenteil (7) eine Gegenplanfläche (25) aufweist, wobei die Planfläche (23) und die Gegenplanfläche (25) eingerichtet sind, um in montiertem Zustand des Prüfvorrichtungshalters (5) an dem Schlittenteil (7) flächig aneinander anzuliegen.

11. Befestigungsanordnung (3) nach einem der vorhergehenden Ansprüche, **dadurch gekennzeichnet, dass** das Schlittenteil (7)
a) durch Schlittenlagestifte, und/oder
b) durch wenigstens eine Verschraubung
lagefest mit einem Schlitten (39) der Kraftmesseinrichtung (1) verbunden ist.

12. Befestigungsanordnung (3) nach einem der vorhergehenden Ansprüche, **dadurch gekennzeichnet, dass** der Prüfvorrichtungshalter (5) einen Prüfbalken (43) aufweist, an dem wenigstens eine Prüfvorrichtung (45) befestigbar oder befestigt ist.

13. Befestigungsanordnung (3) nach Anspruch 12, **dadurch gekennzeichnet, dass** der Prüfbalken (43) wenigstens eine Haltebohrung (49) zur Befestigung der wenigstens einen Prüfvorrichtung (45) aufweist.

14. Befestigungsanordnung (3) nach einem der vorhergehenden Ansprüche, **dadurch gekennzeichnet, dass** die Befestigungsanordnung (3) eine Schutzabdeckung (41) aufweist, die an dem Prüfvorrichtungshalter (5) befestigbar und gemeinsam mit dem Prüfvorrichtungshalter (5) an dem Kraftmessturm (9) verlagerbar ist.

15. Befestigungsanordnung (3) nach Anspruch 14, **dadurch gekennzeichnet, dass** die Schutzabdeckung (41) an dem Prüfvorrichtungshalter (5) relativ zu dem Prüfvorrichtungshalter (5) in Hochrichtung des Kraftmessturms (9) verlagerbar anordenbar ist.

16. Befestigungsanordnung (3) nach einem der Ansprüche 14 oder 15, **dadurch gekennzeichnet, dass** die Schutzabdeckung eine transparente Scheibe oder eine transparente Einfassung, insbesondere aus Polycarbonat, aufweist, oder als transparente Scheibe oder transparente Einfassung, insbesondere aus Polycarbonat, ausgebildet ist.

17. Kraftmesseinrichtung (1), mit einer Befestigungsanordnung (3) nach einem der Ansprüche 1 bis 16.

18. Kraftmesseinrichtung (1) nach Anspruch 17, **dadurch gekennzeichnet, dass** die Kraftmesseinrichtung (1) eingerichtet ist zur Messung von Zug- und/oder Druckkräften an medizinischen Hohlkörpern.

19. Prüfvorrichtungshalter (5), mit wenigstens einem Lagebestimmungselement (11), einer Winkeljustiervorrichtung (15), sowie wenigstens einem Fixierelement (19), wobei der Prüfvorrichtungshalter (5) eingerichtet ist zur Verwendung als Prüfvorrichtungshalter (5) einer Befestigungsanordnung (3) nach einem der Ansprüche 1 bis 16.

20. Schlittenteil (7), mit wenigstens einem Gegenlagebestimmungselement (13), einer Winkeljustiervorrichtung (17), sowie wenigstens einem Gegenfixierelement (21), wobei das Schlittenteil (7) eingerichtet ist zur Verwendung als Schlittenteil (7) einer Befestigungsanordnung (3) nach einem der Ansprüche 1 bis 16.

## Claims

1. Mounting arrangement (3) for mounting a test device holder (5) on a force measuring device (1), with
- a test device holder (5), and
- a slide part (7) which is displaceably arrangeable or displaceably arranged on a force measuring tower (9) of a force measuring device (1) in the vertical direction of the force measuring tower (9), wherein
- the test device holder (5) comprises at least one position determining element (11) and the slide part (7) comprises at least one counter position determining element (13), wherein
- the position determining element (11) and the counter position determining element (13) are adapted to determine a position of the test device holder (5) relative to the slide part (7) in at least one direction selected from a vertical direction of the force measuring tower (9) and a direction perpendicular to the vertical direction, and at the same time to permit rotation of the test device holder (5) relative to the slide part (7) about an axis of rotation (D) defined by the position determining element (11) and/or the counter position determining element (13), wherein
- the test device holder (5) comprises a first angle adjustment device (15) and the slide part (7) comprises a second angle adjustment device (17) adapted to adjust and preferably fix an angle of the test device holder (5) relative to the slide part (7) about the axis of rotation (D), and wherein
- the test device holder (5) comprises at least one fixing element (19) and the slide part (7) comprises at least one counter fixing element (21), wherein
- the fixing element (19) and the counter fixing element (21) are adapted to fix the test device holder (5) to the slide part (7).

2. Mounting arrangement (3) according to one of the preceding claims, **characterised in that** one element, selected from the position determining element (11) and the counter position determining element (13), comprises a position pin (29), wherein the other element, selected from the counter position determining element (13) and the position determining element (11), comprises a position pin accommodation (27), wherein the position pin accommodation (27) is adapted to receive the position pin (29).

3. Mounting arrangement (3) according to one of the preceding claims, **characterised in that** the position determining element (11) is arranged centrally on the test device holder (5) in at least one direction.

4. Mounting arrangement (3) according to one of the preceding claims, **characterised in that** one device, selected from the first angle adjustment device (15) and the second angle adjustment device (17), comprises an adjusting tongue (31), wherein the other device, selected from the second angle adjustment device (17) and the first angle adjustment device (15), has a tongue accommodation (33) with two lateral borders (35, 35'), wherein the adjusting tongue (31) can be arranged between the lateral borders (35, 35') and can be swivelled in order to adjust the angle between the test device holder (5) and the slide part (7) about the axis of rotation (D).

5. Mounting arrangement (3) according to claim 4, **characterised in that** an adjusting pin (51, 51') is arranged in or on at least one lateral border (35, 35') of the lateral borders (35, 35') so as to be displaceable in the lateral direction, which pin engages in the tongue accommodation (33) in order to pivot the adjusting tongue (31) when the adjusting pin (51, 51') is displaced in the lateral direction.

6. Mounting arrangement (3) according to claim 5, **characterised in that** the adjusting pin (51, 51') is configured as an adjusting screw which preferably meshes with a thread of the lateral border (35, 35') associated with the adjusting pin (51, 51').

7. Mounting arrangement (3) according to one of the preceding claims, **characterised in that** the fixing element (19) is configured as a slotted hole (52), wherein the counter fixing element (21) is configured as at least one screw hole (53).

8. Mounting arrangement (3) according to one of the preceding claims, **characterised in that** the counter fixing element (21) comprises two screw holes (53).

9. Mounting arrangement (3) according to one of claims 7 or 8, **characterised in that** the mounting arrangement (3) comprises a washer (55) with at least one through hole (57), wherein the washer (55) is adapted to cover the slotted hole (52) on the test device holder (5) in the mounted state.

10. Mounting arrangement (3) according to one of the preceding claims, **characterised in that** the test device holder (5) has a flat surface (23), wherein the slide part (7) has a counter flat surface (25), wherein the flat surface (23) and the counter flat surface (25) are adapted to lie flat against one another on the slide part (7) in the mounted state of the test device holder (5).

11. Mounting arrangement (3) according to one of the preceding claims, **characterised in that** the slide part (7)
a) by slide bearing pins, and/or
b) by at least one screw connection
fixed in position to a slide (39) of the force measuring device (1).

12. Mounting arrangement (3) according to one of the preceding claims, **characterised in that** the test device holder (5) comprises a test beam (43) to which at least one test device (45) can be mounted or is mounted.

13. Mounting arrangement (3) according to claim 12, **characterised in that** the test beam (43) comprises at least one retaining hole (49) for mounting the at least one test device (45).

14. Mounting arrangement (3) according to one of the preceding claims, **characterised in that** the mounting arrangement (3) comprises a protective cover (41) which can be fastened to the test device holder (5) and can be displaced together with the test device holder (5) on the force measuring tower (9).

15. Mounting arrangement (3) according to claim 14, **characterised in that** the protective cover (41) is displaceably arrangeable on the test device holder (5) relative to the test device holder (5) in the vertical direction of the force measuring tower (9).

16. Mounting arrangement (3) according to one of claims 14 or 15, **characterised in that** the protective cover comprises a transparent pane or a transparent bezel, in particular made of polycarbonate, or is configured as a transparent pane or transparent bezel, in particular made of polycarbonate.

17. Force measuring device (1), with a mounting arrangement (3) according to one of claims 1 to 16.

18. Force measuring device (1) according to claim 17, **characterised in that** the force measuring device (1) is adapted to measure tensile and/or compressive forces on hollow medical bodies.

19. Test device holder (5), with at least one position determining element (11), an angle adjustment device (15), as well as at least one fixing element (19), wherein the test device holder (5) is adapted for use as a test device holder (5) of a mounting arrangement (3) according to one of claims 1 to 16.

20. Slide part (7), with at least one counter position determining element (13), an angle adjustment device (17), as well as at least one counter fixing element (21), wherein the slide part (7) is adapted for use as a slide part (7) of a mounting arrangement (3) according to one of claims 1 to 16.

## Revendications

1. Ensemble de fixation (3) destiné à fixer un support de dispositif de vérification (5) sur un dispositif de mesure de force (1), comportant
- un support de dispositif de vérification (5), et
- un élément de coulisseau (7) qui est monté ou susceptible d'être monté, de manière déplaçable, sur une tour de mesure de force (9) d'un dispositif de mesure de force (1) dans le sens ascendant de la tour de mesure de force (9), dans lequel
- le support de dispositif de vérification (5) présente au moins un élément de détermination de position (11) et l'élément de coulisseau (7) présente au moins un élément de détermination de contre-position (13), dans lequel
- l'élément de détermination de position (11) et l'élément de détermination de contre-position (13) sont conçus pour déterminer une position du support de dispositif de vérification (5) par rapport à l'élément de coulisseau (7) dans au moins un sens, choisi parmi un sens ascendant de la tour de mesure de force (9) et un sens perpendiculaire audit sens ascendant, en permettant en même temps une rotation du support de dispositif de vérification (5) par rapport à l'élément de coulisseau (7) autour d'un axe de rotation (D) défini par l'élément de détermination de position (11) et/ou l'élément de détermination de contre-position (13), dans lequel
- le support de dispositif de vérification (5) présente un premier dispositif d'ajustage d'angle (15) et l'élément de coulisseau (7) présente un deuxième dispositif d'ajustage d'angle (17) conçus pour ajuster et de préférence déterminer un angle du support de dispositif de vérification (5) par rapport à l'élément de coulisseau (7) autour de l'axe de rotation (D), et dans lequel
- le support de dispositif de vérification (5) comporte au moins un élément de fixation (19), l'élément de coulisseau (7) comportant au moins un élément de contre-fixation (21), dans lequel
- l'élément de fixation (19) et l'élément de contre-fixation (21) sont conçus pour fixer le support de dispositif de vérification (5) sur l'élément de coulisseau (7).

2. Ensemble de fixation (3) selon l'une des revendications précédentes, **caractérisé en ce qu'**un élément, choisi parmi l'élément de détermination de position (11) et l'élément de détermination de contre-position (13), présente une goupille de position (29), l'autre élément, choisi parmi l'élément de détermination de contre-position (13) et l'élément de détermination de position (11), présente un logement de goupille de position (27), le logement de goupille de position (27) étant conçu pour accueillir la goupille de position (29).

3. Ensemble de fixation (3) selon l'une des revendications précédentes, **caractérisé en ce que** l'élément de détermination de position (11) est disposé centralement, au moins dans une direction, sur le support de dispositif de vérification (5).

4. Ensemble de fixation (3) selon l'une des revendications précédentes, **caractérisé en ce qu'**un dispositif, choisi parmi le premier dispositif d'ajustage d'angle (15) et le deuxième dispositif d'ajustage d'angle (17), comporte une lame d'ajustage (31), l'autre dispositif, choisi parmi le deuxième dispositif d'ajustage d'angle (17) et le premier dispositif d'ajustage d'angle (15), présente un logement de lame (33) comportant deux encadrements latéraux (35, 35'), la lame d'ajustage (31) étant susceptible d'être disposée et pivotée entre les encadrements latéraux (35, 35') afin d'ajuster l'angle entre le support de dispositif de vérification (5) et l'élément de coulisseau (7) autour de l'axe de rotation (D).

5. Ensemble de fixation (3) selon la revendication 4, **caractérisé en ce qu'**une goupille d'ajustage (51, 51') est disposée de manière déplaçable en direction latérale dans ou sur au moins un encadrement latéral (35, 35') des encadrements latéraux (35, 35') qui prend dans le logement de lame (33) pour pivoter la lame d'ajustage (31) lorsque la goupille d'ajustage (51, 51') est déplacée en direction latérale.

6. Ensemble de fixation (3) selon la revendication 5, **caractérisé en ce que** la goupille d'ajustage (51, 51') est prévue sous forme d'une vis d'ajustage qui peigne, de préférence, grâce à un alésage de l'encadrement latéral (35, 35') associé à la goupille d'ajustage (51, 51').

7. Ensemble de fixation (3) selon l'une des revendications précédentes, **caractérisé en ce que** l'élément de fixation (19) est prévu sous forme de lumière oblongue (52), l'élément de contre-fixation (21) étant conçu sous forme d'au moins un alésage fileté (53).

8. Ensemble de fixation (3) selon l'une des revendications précédentes, **caractérisé en ce que** l'élément de contre-fixation (21) comporte deux alésages filetés (53).

9. Ensemble de fixation (3) selon l'une des revendications 7 ou 8, **caractérisé en ce que** l'ensemble de fixation (3) présente une rondelle plate (55) comportant au moins un trou traversant (57), la rondelle plate (55) étant conçue pour couvrir, en état monté, la lumière oblongue (52) prévue sur le support de dispositif de vérification (5).

10. Ensemble de fixation (3) selon l'une des revendications précédentes, **caractérisé en ce que** le support de dispositif de vérification (5) présente une surface plane (23), l'élément de coulisseau (7) présentant une contre-surface plane (25), la surface plane (23) et la contre-surface plane (25) étant conçues pour s'appliquer à plat, en état monté du support de dispositif de vérification (5), l'une à l'autre sur l'élément de coulisseau (7).

11. Ensemble de fixation (3) selon l'une des revendications précédentes, **caractérisé en ce que** l'élément de coulisseau (7) est relié,
a) au moyen de goupilles de position de coulisseau, et/ou
b) grâce à au moins un raccord à vis,
en position fixée, à un coulisseau (39) du dispositif de mesure de force (1).

12. Ensemble de fixation (3) selon l'une des revendications précédentes, **caractérisé en ce que** le support de dispositif de vérification (5) présente une barre de vérification (43) sur laquelle au moins un dispositif de vérification (45) est monté ou susceptible d'être monté.

13. Ensemble de fixation (3) selon la revendication 12, **caractérisé en ce que** la barre de vérification (43) présente au moins un alésage de maintien (49) destiné à la fixation de l'au moins un dispositif de vérification (45).

14. Ensemble de fixation (3) selon l'une des revendications précédentes, **caractérisé en ce que** l'ensemble de fixation (3) présente un couvercle de protection (41) susceptible d'être monté sur le support de dispositif de vérification (5) et d'être déplacé ensemble avec le support de dispositif de vérification (5) sur la tour de mesure de force (9).

15. Ensemble de fixation (3) selon la revendication 14, **caractérisé en ce que** le couvercle de protection (41) sur le support de dispositif de vérification (5) est susceptible d'être monté de manière déplaçable par rapport au support de dispositif de vérification (5) dans le sens ascendant.

16. Ensemble de fixation (3) selon l'une des revendications 14 ou 15, **caractérisé en ce que** le couvercle de protection présente soit un panneau ou un encadrement transparent, notamment en polycarbonate, soit est conçu sous forme de panneau ou encadrement transparent, notamment en polycarbonate.

17. Dispositif de mesure de force (1) comportant un ensemble de fixation (3) selon l'une des revendications 1 à 16.

18. Dispositif de mesure de force (1) selon la revendication 17, **caractérisé en ce que** le dispositif de mesure de force (1) est conçu pour mesurer des forces de traction et/ou de compression sur des corps creux médicaux.

19. Support de dispositif de vérification (5) comportant au moins un élément de détermination de position (11), un dispositif d'ajustage d'angle (15) ainsi qu'au moins un élément de fixation (19), le support de dispositif de vérification (5) étant conçu pour être utilisé comme support de dispositif de vérification (5) d'un ensemble de fixation (3) selon l'une des revendications 1 à 16.

20. Elément de coulisseau (7) comportant au moins un élément de détermination de contre-position (13), un dispositif d'ajustage d'angle (17) ainsi qu'au moins un élément de contre-fixation (21), dans lequel l'élément de coulisseau (7) est conçu pour être utilisé comme élément de coulisseau (7) d'un ensemble de fixation (3) selon l'une des revendications 1 à 16.
